# EUROPÄISCHE PATENTSCHRIFT

(11) **EP 1 425 619 B1**
(45) Veröffentlichungstag und Bekanntmachung des Hinweises auf die Patenterteilung: **29.11.2006**
(21) Anmeldenummer: 01978157.4
(22) Anmeldetag: 14.09.2001
(51) Int. Cl.: G02B 6/42

(54) **SENDE- UND EMPFANGSANORDNUNG FÜR EINE BIDIREKTIONALE OPTISCHE DATENÜBERTRAGUNG**
TRANSMITTER AND RECEIVER ARRANGEMENT FOR BI-DIRECTIONAL OPTIC DATA TRANSMISSION
ENSEMBLE EMETTEUR-RECEPTEUR POUR TRANSMISSION DE DONNEES OPTIQUE BIDIRECTIONNELLE

(43) Veröffentlichungstag der Anmeldung: 09.06.2004
(73) Patentinhaber: Infineon Technologies AG, 81669 München (DE)
(72) Erfinder: SCHUNK, Nikolaus, 93142 Maxhütte-Haidhof (DE)
(74) Vertreter: Müller, Wolfram Hubertus
(86) Internationale Anmeldenummer: PCT/DE2001/003605
(87) Internationale Veröffentlichungsnummer: WO 2003/027744

(56) Entgegenhaltungen:
- DE-A- 3 716 772
- DE-A- 19 834 090
- US-A- 5 278 929
- PATENT ABSTRACTS OF JAPAN vol. 012, no. 231 (P-723), 30. Juni 1988 (1988-06-30) & JP 63 024206 A (MATSUSHITA ELECTRIC IND CO LTD), 1. Februar 1988 (1988-02-01)

## Beschreibung

Bezeichnung der Erfindung: Sende- und Empfangsanordnung für eine bidirektionale optische Datenübertragung.

Die Erfindung betrifft eine Sende- und Empfangsanordnung für eine bidirektionale optische Datenübertragung gemäß dem Oberbegriff des Anspruchs 1. Ihr bevorzugtes Einsatzgebiet liegt in der bidirektionalen Übertragung von Daten über Plastikfasern bzw. Polymerfasern (POF-Fasern).

Es ist bekannt, bidirektionale optische Übertragungsstrecken bei Vollduplex-Betrieb durch zwei getrennte Übertragungsfasern zu realisieren. Aus Platz- und Gewichtsgründen sowie zur Minimierung der erforderlichen Teile ist es jedoch sinnvoll, für die zu übertragenen Daten in beiden Übertragungsrichtungen nur eine Übertragungsfaser zu benutzen. Hierzu sind Sende- und Empfangsanordnungen für eine bidirektionale optische Datenübertragung erforderlich, die zum einen die von einem Sendeelement ausgesandte optische Leistung in die Übertragungsfaser einkoppeln und zum anderen die von einer anderen Sendeeinheit ausgesandte optische Leistung aus der Übertragungsfaser auskoppeln und mittels eines Empfangselementes detektieren.

Weiter ist es bekannt, bidirektionale Sende- und Empfangsanordnungen einzusetzen, bei denen das Sendeelement vor dem Empfangselement angeordnet und die Empfangsdiode von einem nur für die Empfangswellenlänge transparenten Transmissionsfilter abgedeckt wird. Ein elektrisches Übersprechen zwischen Sendeelement und Empfangselement wird dabei durch eine örtliche Trennung der beiden Elemente weitgehend verhindert.

Des weiteren sind bidirektionale Faserübertragungssysteme bekannt, bei denen das von einer Laserdiode abgestrahlte Licht in einer Achse linear polarisiert ist. Ein optisches Nebensprechen wird durch einen Polarisator vor der Fotodiode. unterdrückt. Nachteilig geht bei einem solchen System auch die Empfangsleistung in der Polarisationsrichtung verloren, so daß im Mittel nur die halbe Empfangsleistung dedektiert wird. Ein Fernnebensprechen wird dadurch eingeschränkt, daß keine Steckverbinder auf der optischen Strecke eingebaut werden dürfen und der Endreflex in Verbindung mit der Faserdämpfung in Rückwärtsrichtung so weit reduziert wird, daß ein ausreichender Störabstand zur Detektionsschwelle gegeben ist. Das Empfangselement wird dabei nachteilig nicht auf die minimal mögliche Empfangsleistung ausgelegt.

Die JP 63 024206 A beschreibt eine gattungsgemäße Sende- und Empfangsanordnung. Es ist eine Koppellinse vorgesehen, die über einen Lichtwellenleiter zugeführte Empfangsleistung auf ein Empfangselement abbildet. Des weiteren wird von einem Sendeelement abgestrahlte optische Leitung mittels einer Kollimatorlinse auf einen Randbereich der Koppellinse abgebildet, von dem sie in den Lichtwellenleiter eingekoppelt wird. Die Koppellinse ist als sphärische Linse ausgebildet.

Der vorliegenden Erfindung liegt die Aufgabe zugrunde, eine Sende- und Empfangsanordnung für eine bidirektionale optische Datenübertragung zur Verfügung zu stellen, die eine Anordnung eines Sendeelementes und eines Empfangselementes nebeneinander auf einem Substrat ermöglicht und sich durch gute Koppeleigenschaften auszeichnet.

Diese Aufgabe wird erfindungsgemäß durch eine Sende- und Empfangsanordnung mit den Merkmalen des Anspruchs 1 und eine Sende- und Empfangsanordnung mit den Merkmalen des Anspruchs 2 gelöst. Bevorzugte und vorteilhafte Ausgestaltungen der Erfindungen sind in den Unteransprüchen angegeben.

Die erfindungsgemäße Lösung sieht vor, das von dem Sendeelement ausgestrahlte Licht mittels einer Mikrolinse, die sich auf dem Sendeelement befindet, auf einen Randbereich der Koppellinse abzubilden, während die Empfangsleistung von der Koppellinse auf das Empfangselement abgebildet wird. Auf diese Weise erfolgt eine Trennung der Sende- und Empfangsleistung trotz Anordnung von Sende- und Empfangselement nebeneinander auf einem Substrat. Es wird ein Aufbau einer Sende- und Empfangsanordnung zur Verfügung gestellt, bei dem das Sende- und das Empfangselement nebeneinander auf einem Substrat angeordnet sein können. Dies ermöglicht eine einfachere und kostengünstigere Herstellung der Sende- und Empfangsanordnung.

Des weiteren ist gemäß einer ersten Erfindungsvariante die Koppellinse bifokal ausgebildet, wobei die Koppellinse im Einkopplungsbereich der optischen Leistung des Sendeelementes eine zweite Linse ausbildet. Hierdurch wird die Einkopplung der Sendeleistung in die Faser maximiert. Die Koppellinse ist demnach derart ausgeführt, daß sie in erster Linie die optische Empfangsleistung auf das Empfangselement bündelt und in einem kleinen Randbereich die Sendeleistung des Sendeelementes maximal in die Faser einkoppelt.

Gemäß einer zweiten Erfindungsvariante bildet die Koppellinse einen kurzen Wellenleiteransatz aus, der sich in Richtung des Sendeelementes erstreckt. Der Wellenleiteransatz ist dabei bevorzugt an seinem Ende mit einer Sammellinse versehen. Aufgrund der kurzen Entfernung zwischen dem Sendeelement mit der Mikrolinse und dem Wellenleiteransatz können bei diesem Ausführungsbeispiel Ankoppelverluste äußerst gering gehalten werden.

In einer bevorzugten Ausgestaltung der Erfindung weist das Empfangselement einen Durchmesser auf, der kleiner ist als der Faserkerndurchmesser des angekoppelten Lichtwellenleiters. Bevorzugt liegt der Durchmesser des Empfangselementes, bei dem es sich insbesondere um eine Fotodiode handelt, im Bereich des halben Faserkerndurchmessers oder darunter. Dies weist den Vorteil auf, daß die Fotodiodenkapazität klein ist und in Verbindung mit einem hohen Transimpedanzwiderstand eines Vorverstärkers eine hohe Empfängerempfindlichkeit erreicht wird.

Neben dem Empfangselement ist in geringem Abstand das Sendeelement auf dem Trägersubstrat montiert. Dabei liegen das Empfangselement und das Sendeelement bevorzugt innerhalb der projizierten Querschnittsfläche des Faserkerns des angekoppelten Lichtwellenleiters. Dies gewährleistet einen hohen Kopplungsgrad bei der Ein- bzw. Auskopplung von Sende- bzw. Empfangsleistung in den Faserkern.

In einer bevorzugten Ausgestaltung der Erfindung handelt es sich bei der Koppellinse um eine asphärische Linse, d. h. eine Linse, bei der die Linsenfläche asphärisch gewölbt ist. Die Koppellinse ist auf ihrer dem Sende- und Empfangselement abgewandten Seite plan geschliffen, so daß ein Lichtwellenleiter mit seiner Stirnfläche unmittelbar an der Koppellinse angekoppelt werden kann. Die Verwendung einer asphärischen Linse weist den Vorteil auf, daß aus dem Faserkern des Lichtwellenleiters austretendes, divergierendes Licht auch in den Randbereichen auf das Empfangselement abgebildet werden kann.

Bevorzugt weist auch die auf dem Sendeelement angeordnete Mikrolinse eine asphärische Wölbung auf, um das abgestrahlte Licht auf einen begrenzten Randbereich der bevorzugt asphärischen Koppellinse abbilden zu können. Sofern zur bidirektionalen optischen Datenübertragung unterschiedliche Wellenlängen verwendet werden, wird eine unerwünschte Reflexion der Sendeleistung an den Linsenendflächen sowie an der Stirnfläche der Lichtfaser bevorzugt durch ein farbiges Transmissionsfilter, in das bezüglich der Empfangswellenlänge lichtdurchlässig ist, von dem Empfangselement ferngehalten. Das Transmissionsfilter ist dabei über dem Emfpangselement angeordnet. Durch Verwendung eines Transmissionsfilters können Störsignale soweit unterdrückt werden, daß kein Einfluß auf die Bitfehlerrate und damit die Empfängerempfindlichkeit des Empfangselementes besteht.

Bevorzugt ist das Transmissionsfilter zusätzlich als Sammellinse ausgebildet, so daß empfangene Strahlung noch besser auf das Empfangselement abgebildet wird.

Sofern die Sende- und Empfangsanordnung Lichtsignale gleicher Wellenlänge für die bidirektionale Datenübertragung verwendet, so ist dafür zu sorgen, daß kein oder nur sehr geringfügig direktes Licht oder Streulicht des Sendeelementes auf das Empfangselement überspricht. Hierzu ist dem Empfangselement bevorzugt ein Dämpfungsfilter zugeordnet, der Licht der Sendediode von dem Empfangselement fernhalten soll. Das Dämpfungsfilter ist dabei bevorzugt als für die Sendewellenlänge nicht transparenter Ring ausgebildet, der um das Empfangselement herum angeordnet ist. Der Ring erstreckt sich dabei bevorzugt über eine bestimmte Höhe in Richtung der Koppellinse, stellt somit gewissermaßen einen Schutzwall um das Empfangselement dar. Dadurch wird insbesondere ein direktes seitliches Übersprechen vom Sendeelement zum Empfangselement verhindert.

Weiter kann vorgesehen sein, daß der Ring in Teilbereichen Verdickungen aufweist, insbesondere um reflektierte Leistungen vom Frontreflex bzw. von der Endfläche der asphärischen Koppellinse zu unterdrücken.

Der für die Sendewellenlänge nicht transparente Ring ist bevorzugt mit einem transparenten Transmissionsfilter verbunden, das auf dem Empfangselement angeordnet ist. Das transparente Filter ist dabei bevorzugt als Linse ausgebildet, die sich vor dem Empfangselement befindet.

In einer bevorzugten Ausgestaltung der Erfindung ist unmittelbar neben dem Empfangselement ein bevorzugt baugleiches zweites Empfangselement auf dem Substrat angeordnet oder in diesem ausgebildet, das mit einer optisch nicht transparenten Schicht abgedeckt ist. Dabei ist den beiden Empfangseinheiten eine Auswertschaltung zugeordnet, die durch Differenzbildung der jeweiligen Signale das elektrische Übersprechen sehr stark reduziert bzw. idealerweise eliminiert. Die Differenzauswertung beruht darauf, daß das zweite Empfangselement ausschließlich Störstrahlung detektiert.

Die Erfindung wird nachfolgend unter Bezugnahme auf die Figuren der Zeichnung anhand mehrerer Ausführungsbeispiele näher erläutert. Es zeigen:
- Fig. 1: einen Schnitt durch eine Sende- und Empfangsanordnung;
- Fig. 2a: eine Draufsicht auf ein zweites Ausführungsbeispiel einer Sende- und Empfangsanordnung mit einem Sendeelement und zwei Empfangselementen;
- Fig. 2b: in Draufsicht das Ausführungsbeispiel der Fig. 2a, wobei das eine Empfangselement von einem Transmissionsfilter abgedeckt ist;
- Fig. 2c: das dem Ausführungsbeispiel der Fig. 2b entsprechende Gegenstück einer Sende- und Empfangsanordnung bei einer bidirektionalen Übertragungsstrecke;
- Fig. 2d: in Draufsicht ein weiteres Ausführungsbeispiel einer Sende- und Empfangseinheit, die bei Verwendung gleicher Wellenlängen für den Sende- und Empfangspfad einsetzbar ist, wobei das eine Empfangselement von einem nicht transparenten Ring umgeben ist;
- Fig. 3: ein Ausführungsbeispiel eines Sende- und Empfangselementes in Schnittdarstellung nach der beanspruchen Erfindung, wobei die Sende- und Empfangsanordnung eine bifokale Koppellinse aufweist;
- Fig. 4: ein weiteres Ausführungsbeispiel eines Sende- und Empfangselemente nach der beanspruchen Erfindung in Schnittdarstellung mit einer alternativen Ausgestaltung einer bifokalen Koppellinse und
- Fig. 5: ein weiteres Ausführungsbeispiel einer Sende- und Empfangsanordnung nach der beanspruchen Erfindung in Schnittdarstellung, wobei eine Koppellinse einen Wellenleiteransatz ausbildet.

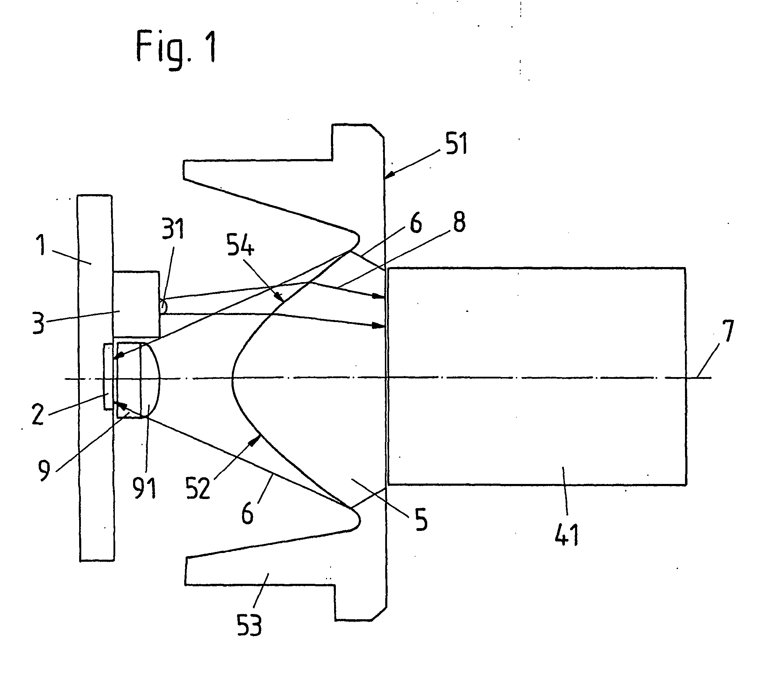

Figur 1 zeigt den grundlegenden Aufbau einer Sende- und Empfangsanordnung. In einem bevorzugt aus Silizium bestehendes Substrat 1 ist eine als Empfangselement dienende Fotodiode 2 in an sich bekannterweise realisiert. Neben der Fotodiode 2 ist ein Sendeelement 3 auf dem Substrat 1 angeordnet, bei dem es sich beispielsweise um eine Leuchtdiode (LED, RCLED (Resonant Cavity LCD)) oder eine Laserdiode (insbesondere eine VCSEL-Laserdiode) handelt. Alternativ kann die Fotodiode 2 auf einem gesonderten Chip ausgebildet und auf dem Substrat 1 angeordnet sein.

Zur Kopplung der Fotodiode 2 und des Sendeelementes 3 mit dem Faserkern 41 einer nicht weiter dargestellten optischen Faser ist eine Koppellinse 5 vorgesehen. Bei der optischen Faser handelt es sich im dargestellten Ausführungsbeispiel um eine Plastik/Polymerfaser (POF-Faser) mit einem POF-Faserkern 41, der beispielsweise einen Durchmesser von 980 µm aufweist.

Die Koppellinse 5 besteht aus einem für die betrachteten Wellenlängen transparenten Material. Es handelt sich beispielsweise um eine Glas- oder Plastiklinse. Sie ist auf ihrer dem Substrat 1 abgewandten Seite 51 plan geschliffen, so daß der POF-Faserkern 41 unmittelbar an diese ebene Fläche 51 der Koppellinse 5 ankoppeln kann. Grundsätzlich kann jedoch auch vorgesehen sein, zwischen die Koppellinse 5 und den POF-Faserkern weitere strahlformende Elemente oder Zwischenstücke einzubringen.

Auf ihrer dem Substrat 1 zugewandten Seite 52 ist die Koppellinse 5 asphärisch ausgebildet, d. h. sie weist eine von der Kreisform abweichende Form auf. Hierdurch wird aus dem Faserkern 41 austretendes, divergierendes Licht 6 derart abgelenkt, daß es ausschließlich auf die Fotodiode 2 fällt, dagegen im wesentlichen keine Strahlung auf das Sendeelement 3 gelenkt wird.

An seinem Umfang bzw. Rand weist die Koppellinse 5 Ausricht- und Aufnahmestrukturen 53 auf, die eine passive Ankopplung der Koppellinse 5 an ein Gehäuse (nicht dargestellt) ermöglichen, das die Sende- und Empfangsanordnung umgibt.

Die Koppellinse 5 ist bevorzugt antireflexbeschichtet, um Relexionen an der Koppellinse zu minimieren.

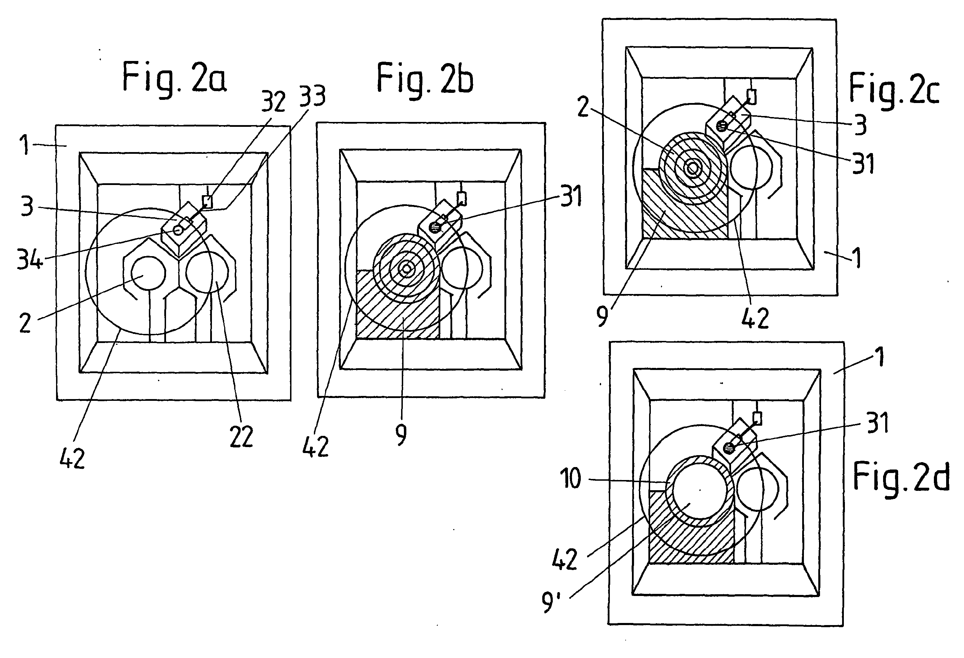

Die geometrische Anordnung der einzelnen Elemente ist derart, daß die optische Achse 7 des Faserkerns 41 mit der optischen Achse der Koppellinse 5 und der Achse der Fotodiode 2 übereinstimmt, diese Elemente also mittig aufeinander ausgerichtet sind. Dementsprechend befindet sich das Sendeelement 3 außermittig neben der Fotodiode 2 auf dem Substrat 1. Die Größenverhältnisse sind dabei derart, daß der Durchmesser der Fotodiode 2 kleiner ist als der halbe Faserkerndurchmesser. Bei entsprechend kleiner Fotodiodenquerschnittsfläche befindet sich das Sendeelement 3 dabei noch innerhalb der projizierten Querschnittsfläche des Faserkerns, wie noch an Hand der Figur 2 ersichtlich sein wird.

Auf dem Sendeelement 3 befindet sich unmittelbar eine Mikrolinse 31, die ebenfalls als sphärische Linse ausgebildet ist. Die Mikrolinse 31 bündelt die nach vorn abgestrahlte optische Leistung des Sendeelementes 3 derart, daß die optische Leistung des Sendeelementes 3 auf einen kleinen Randbereich 54 der Koppellinse fällt. Von diesem Randbereich 54 wird das von dem Sendeelement 3 ausgestrahlte Licht wie durch die Pfeile 8 angedeutet in den Faserkern 41 eingekoppelt.

Die Faser bevorzugt ist eine Multimode-Faser.

Auf der Fotodiode 2 befindet sich ein Transmissionsfilter 9, das eine gewölbte Fläche 91 aufweist und damit zusätzlich als Sammellinse wirkt. Das Transmissionsfilter 9 ist nur für eine bestimmte, zu detektierende Wellenlänge, die aus dem Faserkern 41 ausgekoppelt wird, durchlässig. Alternativ filtert sie zumindest die Wellenlänge des Sendeelements 3 heraus.

Durch das Transmissionsfilter 9 wird ein optisches Übersprechen von dem Sendeelement 3 ausgesandter Signale auf die Fotodiode 2 verhindert. So filtert das Transmissionsfilter Streulicht des Sendeelementes an der Vorderseite und Hinterseite der Koppellinse 5 oder Reflexionen an Faserkopplungen oder vom Ende der Übertragungsstrecke weitgehend heraus. Auch ein eventuelles direktes Übersprechen wird verhindert.

Das Sendeelement 3 sendet beispielsweise rotes Licht aus. Dagegen empfängt die Fotodiode grünes Licht, das von einem an dem anderen Ende der bidirektionalen Übertragungsstrecke angeordneten, grünes Licht aussendenden Sendeelementes ausgestrahlt wird. Die asphärische Koppellinse 5 ist derart ausgeführt, daß die Empfangsleistung am Ende der Faser-Übertragungsstrecke optimal auf die Fotodiode 2 abgebildet wird. Mit der Mikrolinse 31, die direkt und unmittelbar über der Esmissionsfläche des Sendeelementes 3 das emittierte Licht der Sendequelle bündelt, wird die gesamte abgestrahlte Leistung auf einen möglichst kleinen Teil der Koppellinse 4 abgebildet.

Figur 2a zeigt den Aufbau eines bidirektionalen Sende- und Empfangselementes in Frontansicht, wobei der Transmissionsfilter noch nicht dargestellt ist. Das Substrat 1 ist ein anisotropgeätztes Si-Substrat, in dem zwei Fotodioden 2, 22 ausgebildet sind. Die rechte Fotodiode 22 ist dabei mit einer optisch nicht transparenten Schicht abgedeckt. Durch Auswertung der Differenz der von den beiden Fotodioden 2, 22 detektierten Signale können durch ungewünschte Störstrahlung verursachte Störsignale erkannt und mittels einer Differenzschaltung von dem Nutzsignal entfernt werden. Somit wird das elektrische Übersprechen sehr stark reduziert.

Das optische Sendeelement 3 ist in schräger Anordnung auf der Oberfläche des Substrats 1 angeordnet. Der POF-Faserkern 41 gemäß Figur 1 weist einen Durchmesser derart auf, daß die projizierte Faserkernstirnfläche 42 eine Größe besitzt, so daß sich sowohl die eine Fotodiode 2 als auch das optische Sendeelement 3 innerhalb dieser projizierten Stirnfläche befinden.

Durch Anordnung der optischen Sendequelle 3 schräg auf dem Substrat 1 wird der Platz zwischen den beiden Fotodioden 2, 22 optimal ausgenutzt und ein möglichst tiefer Einbau des optischen Sendeelementes 3 in die projizierte Faserkernstirnfläche 42 erreicht. Figur 2a zeigt das optische Sendeelement noch ohne Mikrolinse. Über Leitungszuführungen 32 und einen Buntdraht 33 wird das Sendeelement 3 nach an sich bekannterweise kontaktiert, wobei eine optisch aktive Fläche 34 ein Lichtsignal abstrahlt, das gemäß einem zu übertragenden Datensignal moduliert ist.

Gemäß Figur 2b ist der optischen aktiven Fläche 34 des Sendeelementes 3 eine asphärische Mikrolinse 31 zugeordnet. Gleichzeitig befindet sich oberhalb und seitlich der einen Fotodiode 2 ein Transmissionsfilter 9. Im dargestellten Ausführungsbeispiel sendet das Sendeelement 3 rotes Licht aus, während das Empfangselement 2 grünes Licht delektiert und der Transmissionsfilter dementsprechend als Grünfilter ausgebildet ist. Der grüne Transmissionsfilter 9 unterdrückt dabei, wie im Bezug auf Figur 1 erläutert, ein optisches Übersprechen.

Das Ausführungsbeispiel der Figur 2c entspricht dem Ausführungsbeispiel der Figur 2b, wobei der zugehörige, auf der anderen Seite einer bidirektionalen Übertragungsstrecke angeordnete Transceiver dargestellt ist, der grünes Licht aussendet und rotes Licht empfängt, wie durch die unterschiedlichen Straffuren angedeutet.

Die Figur 2d zeigt eine mögliche Ausbildung der Sende- und Empfangsanordnung für den Fall, daß für die bidirektionale Datenübertragung nur eine Wellenlänge verwendet wird. Das Transmissionsfilter 9' ist für diesen Fall lediglich als transparente Sammellinse ausgebildet und kann alternativ ganz wegfallen. Um ein optisches Übersprechen direkt von dem Sendeelement 3 auf die Fotodiode 2 zu verhindern, ist ein abstehender lichtabsorbierender Dämpfungsring 10 auf dem Substrat 1 angeordnet, der die Fotodiode 2 umgibt. Dadurch wird insbesondere ein direktes Übersprechen vom Sendeelement 3 auf das Empfangselement 2 verhindert.

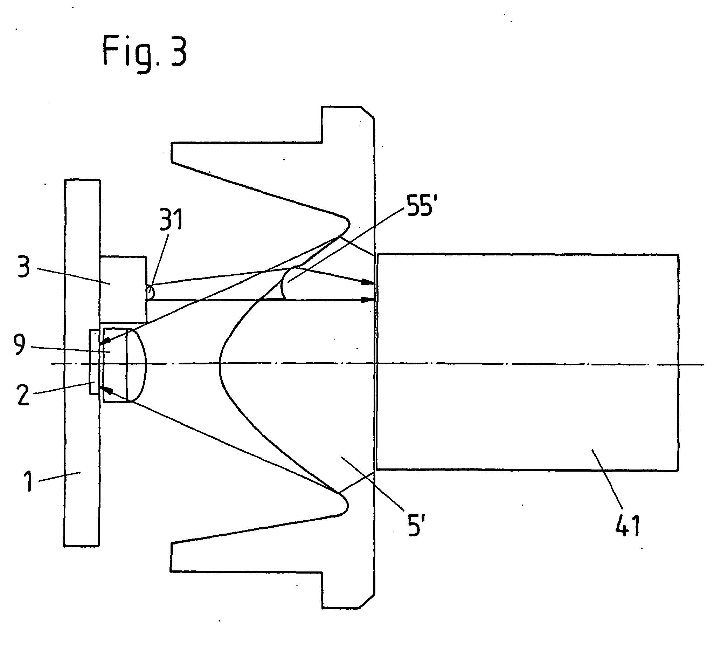

Figur 3 zeigt ein Ausführungsbeispiel der Erfindung, bei dem die asphärische Linse 5' bifokal ausgebildet ist. Dabei ist in dem Bereich, in dem von dem Sendeelement 3 bzw. der Mikrolinse 31 ausgestrahlte Strahlung auf die Kopplungslinse fällt, eine Zweitlinse 55' in der Koppellinse 5' ausgebildet. Die Zweitlinse 55' koppelt in einem kleinen Bereich die Sendeleistungen des Sendeelements 3 maximal in den Faserkern 41 ein. In dem Ausführungsbeispiel der Figur 3 ist die Zweitlinse 55' dabei nach innen ausgeführt. Dies kann bei sich aufweitendem Sendestrahl jedoch ungünstig sein, da die Linse mit sich aufweitendem Sendestrahl um so größer wird und damit zunehmend Empfangsleistung verlorengeht.

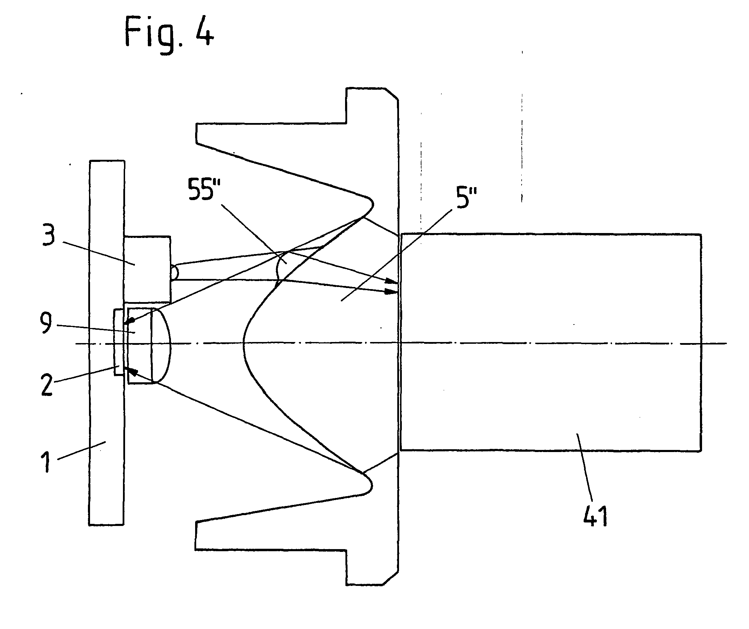

Figur 4 zeigt eine alternative Ausbildung einer Zusatzlinse 55'', bei der die Zusatzlinse 55'' außen auf der Oberfläche der asphärischen Koppellinse 5'' ausgeführt ist. Ansonsten ergeben sich keine Unterschiede zu den Ausführungsbeispielen der Figur 3 bzw. Figur 1.

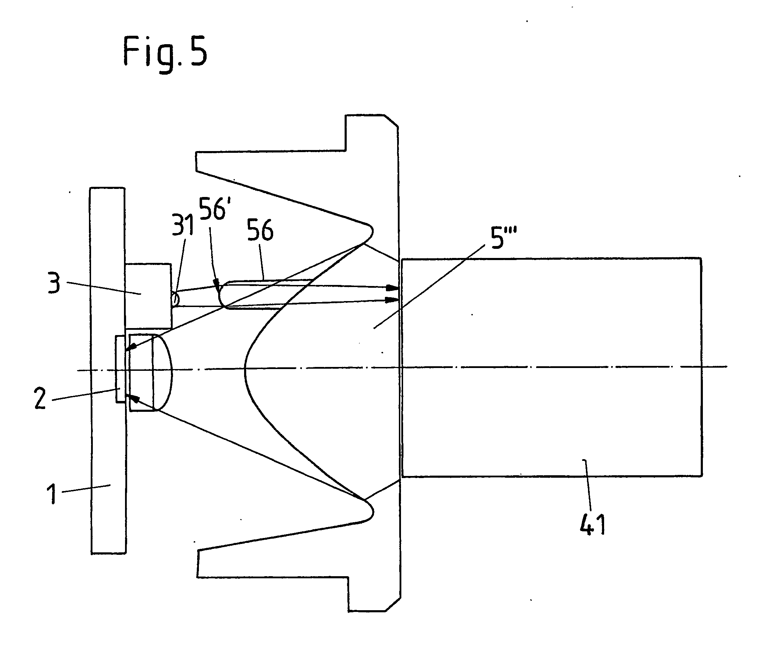

Figur 5 zeigt ein Ausführungsbeispiel eines Sende- und Empfangselementes bzw. Transceivers der Erfindung, bei der eine Lichteinkopplung von dem Sendeelement 3 in die Koppellinse 5''' und weiter in den Faserkern 41 über einen kurzen Wellenleiteransatz 56 erfolgt, der sich von der Oberfläche der Koppellinse 5''' in Richtung der Mikrolinse 31 des Sendeelementes 3 erstreckt. Der Wellenleiteransatz 56 ist dabei an seinem Ende mit einer Linse 56' ausgeführt.

Aufgrund der kurzen Entfernung zwischen Mikrolinse 31 und dem Wellenleiteransatz 56 können die Ankoppelverluste sehr gering gehalten werden. Einhergehend mit dem besseren Koppelwirkungsgrad steigen jedoch auch die Anforderungen an die Koppelgenauigkeit. Das Sendeelement 3 sollte daher in möglichst präzisem Abstand zur optischen Achse 7 und mit einem genau eingehaltenen Winkel auf dem Si-Substrat 1 aufmontiert werden (vgl. Figur 2a). Zusätzlich sollte die Koppellinse eine Uhrzeitmarkierung aufweisen, damit eine möglichst genaue Kopplung unter Verwendung bildunterstützender Verfahren möglich ist.

## Patentansprüche

1. Sende- und Empfangsanordnung für eine bidirektionale optische Datenübertragung, insbesondere über Plastikfaser-Lichtwellenleiter, mit
- einem Sendeelement (3),
- einem Empfangselement (2),
- einer Koppellinse (5', 5''), die über einen Lichtwellenleiter (41) zugeführte optische Empfangsleistung auf das Empfangselement (2) abbildet und
- einer Linse (31), die abgestrahlte optische Leistung des Sendeelementes (3) nach vorne bündelt und auf einen Randbereich (54) der Koppellinse (5', 5'') abbildet, von dem sie in den Lichtwellenleiter eingekoppelt wird,
- wobei das Empfangselement (2) und das Sendeelement (1) nebeneinander angeordnet sind,
**dadurch gekennzeichnet, daß**
- die Linse eine auf dem Sendeelement (3) montierten Mikrolinse (31) ist,
- das Empfangselement (2) und das Sendeelement (1) nebeneinander auf einem Substrat (1) angeordnet sind und
- die Koppellinse (5', 5'') bifokal ausgebildet ist, wobei
- die Koppellinse im Einkoppelbereich der optischen Leistung des Sendeelementes eine Zweitlinse (55', 55'') ausbildet.

2. Sende- und Empfangsanordnung für eine bidirektionale optische Datenübertragung, insbesondere über Plastikfaser-Lichtwellenleiter, mit
- einem Sendeelement (3),
- einem Empfangselement (2),
- einer Koppellinse (5'''), die über einen Lichtwellenleiter (41) zugeführte optische Empfangsleistung auf das Empfangselement (2) abbildet und
- einer Linse (31), die abgestrahlte optische Leistung des Sendeelementes (3) nach vorne bündelt und auf einen Randbereich (54) der Koppellinse (5''') abbildet, von dem sie in den Lichtwellenleiter eingekoppelt wird,
- wobei das Empfangselement (2) und das Sendeelement (1) nebeneinander angeordnet sind,
**dadurch gekennzeichnet, daß**
- die Linse eine auf dem Sendeelement (3) montierten Mikrolinse (31) ist,
- das Empfangselement (2) und das Sendeelement (1) nebeneinander auf einem Substrat (1) angeordnet sind und
- die Koppellinse (5''') einen kurzen Wellenleiteransatz (56) ausbildet, der sich in Richtung des Sendeelements (1) erstreckt.

3. Sende- und Empfangsanordnung nach Anspruch 1 oder 2, **dadurch gekennzeichnet, daß** das Empfangselement (2) einen Durchmesser aufweist, der kleiner ist als der Faserkerndurchmesser des angekoppelten Lichtwellenleiters, insbesondere kleiner oder gleich dem halben Faserkerndurchmesser ist.

4. Sende- und Empfangsanordnung nach Anspruch 3, **dadurch gekennzeichnet, daß** das Sendeelement (3) unmittelbar neben dem Empfangselement (2) angeordnet ist und sich beide innerhalb der projizierten Querschnittsfläche (42) des Faserkerns (41) des angekoppelten Lichtwellenleiters befinden.

5. Sende- und Empfangsanordnung nach mindestens einem der vorangehenden Ansprüche, **dadurch gekennzeichnet, daß** die Koppellinse (5) eine asphärische Linse ist.

6. Sende- und Empfangsanordnung nach mindestens einem der vorangehenden Ansprüche, **dadurch gekennzeichnet, daß** die Mikrolinse (31) eine asphärische Linse ist.

7. Sende- und Empfangsanordnung nach Anspruch 2, **dadurch gekennzeichnet, daß** der Wellenleiteransatz (56) an seinem dem Sendeelement (3) zugewandten Ende eine Linse (56') aufweist.

8. Sende- und Empfangsanordnung nach mindestens einem der vorangehenden Ansprüche, wobei die Sende- und Empfangsanordnung Licht einer ersten Wellenlänge aussendet und Licht einer zweiten Wellenlänge empfängt, **dadurch gekennzeichnet, daß** vor dem Empfangselement (2) ein Transmissionsfilter (9) angeordnet ist, der für Licht der ersten Wellenlänge nicht transparent ist.

9. Sende- und Empfangsanordnung nach Anspruch 8, **dadurch gekennzeichnet, daß** das Transmissionsfilter (9) gleichzeitig eine Sammellinse ist bzw. aufweist.

10. Sende- und Empfangsanordnung nach Anspruch 8 oder 9, **dadurch gekennzeichnet, daß** das vom Sendeelement (3) ausgesandte Licht grünes Licht oder rotes Licht, das vom Empfangselement (2) empfangene Licht rotes Licht oder grünes Licht und der Transmissionsfilter (9) ein Rotfilter oder ein Grünfilter ist.

11. Sende- und Empfangsanordnung nach mindestens einem der Ansprüche 1 bis 7, wobei die Sende- und Empfangsanordnung Licht der gleichen Wellenlänge aussendet und empfängt, **dadurch gekennzeichnet, daß** dem Empfangselement ein Dämpfungsfilter (10) zugeordnet ist, der das Empfangselement (2) vor von dem Sendelement (3) ausgesandtem Licht schützt.

12. Sende- und Empfangsanordnung nach Anspruch 11, **dadurch gekennzeichnet, daß** das Dämpfungsfilter als für die Sendewellenlänge nicht transparenter Ring (10) ausgebildet ist, der um das Empfangselement (2) angeordnet ist.

13. Sende- und Empfangsanordnung nach Anspruch 12, **dadurch gekennzeichnet, daß** der Ring (10) sich in Richtung der Koppellinse (5) erstreckt.

14. Sende- und Empfangsanordnung nach Anspruch 12 oder 13, **dadurch gekennzeichnet, daß** der Ring (10) mit einer transparenten Linse (9') verbunden ist, die auf dem Empfangselement (2) angeordnet ist.

15. Sende- und Empfangsanordnung nach mindestens einem der vorangehenden Ansprüche, **dadurch gekennzeichnet, daß** unmittelbar neben dem Empfangselement (2) ein zweites Empfangselement (22) auf dem Substrat (1) angeordnet ist, das mit einer optisch nicht transparenten Schicht abgedeckt ist, wobei den beiden Empfangselementen (2, 22) eine Auswertschaltung zugeordnet ist, die durch Differenzbildung der jeweiligen Signale Störsignale herausfiltert.

## Claims

1. Transmission and reception arrangement for bidirectional optical data transmission, in particular through plastic-fibre optical waveguides, having
- a transmission element (3),
- a reception element (2),
- a coupling lens (5', 5'') that projects optical reception power, delivered through an optical waveguide (41), onto the reception element (2), and
- a lens (31) which focuses-forward emitted optical power of the transmission element (3) and projects it onto an edge region (54) of the coupling lens (5', 5''), from which it is injected into the optical waveguide,
- the reception element (2) and the transmission element (1) being arranged next to one another,
**characterized in that**
- the lens is a microlens (31) mounted on the transmission element (3),
- the reception element (2) and the transmission element (1) are arranged next to one another on a substrate (1), and
- the coupling lens (5', 5'') is bifocally designed,
- the coupling lens forming a secondary lens (55', 55'') in the injection region of the optical power of the transmission element.

2. Transmission and reception arrangement for bidirectional optical data transmission, in particular through plastic-fibre optical waveguides, having
- a transmission element (3),
- a reception element (2),
- a coupling lens (5''') that projects optical reception power, delivered through an optical waveguide (41), onto the reception element (2), and
- a lens (31) which focuses-forward emitted optical power of the transmission element (3) and projects it onto an edge region (54) of the coupling lens (5'''), from which it is injected into the optical waveguide,
- the reception element (2) and the transmission element (1) being arranged next to one another,
**characterized in that**
- the lens is a microlens (31) mounted on the transmission element (3),
- the reception element (2) and the transmission element (1) are arranged next to one another on a substrate (1), and
- the coupling lens (5''') forms a short waveguide appendage (56) which extends in the direction of the transmission element.(1).

3. Transmission and reception arrangement according to Claim 1 or 2, **characterized in that** the reception element (2) has a diameter which is less than the fibre-core diameter of the coupled optical waveguide, in particular less than or equal to half the fibre-core diameter.

4. Transmission and reception arrangement according to Claim 3, **characterized in that** the transmission element (3) is arranged directly next to the reception element (2), and both are located within the projected cross-sectional area (42) of the fibre core (41) of the coupled optical waveguide.

5. Transmission and reception arrangement according to at least one of the preceding claims, **characterized in that** the coupling lens (5) is an aspherical lens.

6. Transmission and reception arrangement according to at least one of the preceding claims,
**characterized in that** the microlens (31) is an aspherical lens.

7. Transmission and reception arrangement according to Claim 2, **characterized in that** the waveguide appendage (56) has a lens (56') on its end facing the transmission element (3).

8. Transmission and reception arrangement according to at least one of the preceding claims, wherein the transmission and reception arrangement emits light of a first wavelength and receives light of a second wavelength, **characterized in that** a transmission filter (9), which is non-transparent for light of the first wavelength, is arranged in front of the reception element (2).

9. Transmission and reception arrangement according to Claim 8, **characterized in that** the transmission filter (9) also is, or has, a converging lens.

10. Transmission and reception arrangement according to Claim 8 or 9, **characterized in that** the light emitted by the transmission element (3) is green light or red light, and the light received by the reception element (2) is red light or green light, and the transmission filter (9) is a red filter or a green filter.

11. Transmission and reception arrangement according to at least one of Claims 1 to 7, wherein the transmission and reception arrangement emits and receives light of the same wavelength, **characterized in that** an attenuation filter (10), which protects the reception element (2) from the light emitted by the transmission element (3), is assigned to the reception element.

12. Transmission and reception arrangement according to Claim 11, **characterized in that** the attenuation filter is designed as a ring (10), which is non-transparent for the transmission wavelength and is arranged around the reception element (2).

13. Transmission and reception arrangement according to Claim 12, **characterized in that** the ring (10) extends in the direction of the coupling lens (3).

14. Transmission and reception arrangement according to Claim 12 or 13, **characterized in that** the ring (10) is connected to a transparent lens (9'), which is arranged on the reception element (2).

15. Transmission and reception arrangement according to at least one of the preceding claims, **characterized in that** a second reception element (22), which is covered with an optically non-transparent layer, is arranged directly next to the reception element (2) on the substrate (1), an evaluation circuit, which filters out noise signals by taking the difference between the respective signals, being assigned to the two reception elements (2, 22).

## Revendications

1. Dispositif émetteur et récepteur pour une transmission optique de données bidirectionnelle, notamment par un guide d'ondes lumineuses à fibres en matière plastique, comprenant
- un élément (3) émetteur ;
- un élément (2) récepteur ;
- une lentille (5', 5'') de couplage, qui reproduit sur l'élément (2) récepteur de la puissance de réception optique apportée par un guide (41) d'ondes lumineuses ; et
- une lentille (31) qui forme en faisceau allant vers l'avant de la puissance optique émise de l'élément (3) émetteur et la reproduit sur une partie (54) de bord de la lentille (5', 5'') de couplage, d'où elle est injectée dans le guide d'ondes lumineuses ;
- l'élément (2) récepteur et l'élément (1) émetteur étant disposés l'un à côté de l'autre,
**caractérisé en ce que**
- la lentille est une microlentille (31) montée sur l'élément (3) émetteur ;
- l'élément (2) récepteur et l'élément (1) émetteur sont disposés l'un à côté de l'autre sur un substrat (1) ; et
- la lentille (5', 5'') de couplage est bifocale ;
- la lentille de couplage formant une deuxième lentille (55', 55'') dans la partie d'injection de la puissance optique de l'élément émetteur.

2. Dispositif émetteur et récepteur pour une transmission optique de données bidirectionnelle, notamment par un guide d'ondes lumineuses à fibres en matière plastique, comprenant
- un élément (3) émetteur ;
- un élément (2) récepteur ;
- une lentille (5', 5'') de couplage, qui reproduit sur l'élément (2) récepteur de la puissance de réception optique apportée par un guide (41) d'ondes lumineuses ; et
- une lentille (31) qui forme en faisceau allant vers l'avant de la puissance optique émise de l'élément (3) émetteur et la reproduit sur une partie (54) de bord de la lentille (5', 5") de couplage d'où elle est injectée dans le guide d'ondes lumineuses ;
- l'élément (2) récepteur et l'élément (1) émetteur étant disposés l'un à côté de l'autre,
**caractérisé en ce que**
- la lentille est une microlentille (31) montée sur l'élément (3) émetteur ;
- l'élément (2) récepteur et l'élément (1) émetteur sont disposés l'un à côté de l'autre sur un substrat (1) ; et
- la lentille (5''') de couplage forme un prolongement (56) court de guide d'ondes, qui s'étend en direction de l'élément (1) émetteur.

3. Dispositif émetteur et récepteur suivant la revendication 1 ou 2, **caractérisé en ce que** l'élément (2) récepteur a un diamètre qui est plus petit que le diamètre du coeur de fibre du guide d'ondes lumineuses couplé, en étant notamment inférieur ou égal à la moitié du diamètre du coeur de fibre.

4. Dispositif émetteur et récepteur suivant la revendication 3, **caractérisé en ce que** l'élément (3) émetteur est disposé juste à côté de l'élément (2) récepteur et les deux se trouvent à l'intérieur de la surface (42) de section transversale projetée du coeur (41) de fibre du guide d'ondes lumineuses couplé.

5. Dispositif émetteur et récepteur suivant au moins l'une des revendications précédentes, **caractérisé en ce que** la lentille (5) de couplage est une lentille asphérique.

6. Dispositif émetteur et récepteur suivant au moins l'une des revendications précédentes, **caractérisé en ce que** la microlentille (31) est une lentille asphérique.

7. Dispositif émetteur et récepteur suivant la revendication 2, **caractérisé en ce que** le prolongement (56) de guide d'ondes a une lentille (56') à son extrémité tournée vers l'élément (3) émetteur.

8. Dispositif émetteur et récepteur suivant au moins l'une des revendications précédentes, dans lequel le dispositif émetteur et récepteur émet de la lumière d'une première longueur d'onde et reçoit de la lumière d'une deuxième longueur d'onde, **caractérisé en ce qu'**il est disposé devant l'élément (2) récepteur un filtre (9) de transmission qui n'est pas transparent pour de la lumière de la première longueur d'onde.

9. Dispositif émetteur et récepteur suivant la revendication 8, **caractérisé en ce que** le filtre (9) de transmission est ou comporte en même temps une lentille convergente.

10. Dispositif émetteur et récepteur suivant la revendication 8 ou 9, **caractérisé en ce que** la lumière émise par l'élément (3) émetteur est de la lumière verte ou de la lumière rouge, la lumière reçue par l'élément (2) récepteur est de la lumière rouge ou de la lumière verte et le filtre (9) de transmission est un filtre rouge ou un filtre vert.

11. Dispositif émetteur et récepteur suivant au moins l'une des revendications 1 à 7, dans lequel le dispositif émetteur et récepteur émet et reçoit de la lumière de la même longueur d'onde, **caractérisé en ce qu'**il est associé à l'élément récepteur un filtre (10) d'atténuation qui protège l'élément (2) récepteur de la lumière émise par l'élément (3) émetteur.

12. Dispositif émetteur et récepteur suivant la revendication 11, **caractérisé en ce que** le filtre d'atténuation est constitué en anneau (10) qui n'est pas transparent à la longueur d'onde d'émission et qui est disposé autour de l'élément (2) récepteur.

13. Dispositif émetteur et récepteur suivant la revendication 12, **caractérisé en ce que** l'anneau (10) s'étend dans la direction de la lentille (5) convergente.

14. Dispositif émetteur et récepteur suivant la revendication 12 ou 13, **caractérisé en ce que** l'anneau (10) est relié à une lentille (9') transparente qui est disposée sur l'élément (2) récepteur.

15. Dispositif émetteur et récepteur suivant au moins l'une des revendications précédentes, **caractérisé en ce qu'il** est disposé sur la substrat (1), juste à côté de l'élément (2) récepteur, un deuxième élément (22) récepteur qui est revêtu d'une couche qui n'est pas transparente du point de vue optique, un circuit d'exploitation qui filtre des signaux parasites par formation d'une différence entre les signaux respectifs étant associé aux deux éléments (2, 22) de réception.
